# EUROPEAN PATENT APPLICATION

(11) **EP 3 822 066 A1**
(43) Date of publication of application: **19.05.2021**
(21) Application number: 19209280.7
(22) Date of filing: 14.11.2019
(51) Int. Cl.: B29C 70/54

(54) **THERMOPLASTIC COMPOSITE MATERIALS HAVING REDUCED VOIDS AND METHODS OF FORMING THE SAME**

(71) Applicant: SABIC Global Technologies B.V., 4612 PX Bergen op Zoom (NL)
(72) Inventor: PRICE, Brian G., Vernon, IN Indiana 47620-9367 (US); KALYANARAMAN, Viswanathan, Vernon, IN Indiana 47620-9367 (US); YOUNGSTROM, Cameron, Washington, WV West Virginia 26181 (US); GOOSSEENS, Johannes Gerardus Petrus, 4612 PX Bergen Op Zoom (NL); JOFORE, Bruke Daniel, 4612 PX Bergen Op Zoom (NL)
(74) Representative: Balder IP Law, S.L.

(57) **Abstract**

A method of forming a thermoplastic polymer/fiber composite includes exposing a layup including a solid thermoplastic polymer and a fiber material to a processing atmosphere having a permeability in the thermoplastic polymer greater than a permeability of nitrogen; heating the exposed layup at a temperature and pressure effective to impregnate the fiber material with the thermoplastic polymer and form an impregnated fiber material; and cooling the impregnated fiber material to provide the composite.

## Description

### BACKGROUND

This disclosure is directed to thermoplastic composite materials having a reduced void content, and in particular thermoplastic/fiber composite materials with a reduced void content.

Thermoplastic composites can be formed by melting a thermoplastic polymer to form a matrix in which a solid, particulate or fibrous, material is disposed. The strength of a thermoplastic composite can be decreased by the presence of voids in the thermoplastic composite. Air bubbles can become trapped in the composite material during mixing of the thermoplastic polymer component of the composite material, during formation of the composite, or both. In composite materials where only some of the thermoplastic composition flows to form an interpenetrating matrix, wettability adds an additional challenge to the management of voids throughout the structure. Once the composite material is solidified, the gas bubbles form voids or pores in the solid. These voids can reduce the structural integrity of the final product. If the pores are visible, they can also reduce the aesthetic appeal of the product. The problem of voids is particularly pronounced in thermoplastic/fiber composite materials where intensive mixing or centrifugation cannot be readily used to remove bubbles or to wet the fibers.

An improved method for forming a thermoplastic/fiber composite material having a lower void content would be desirable.

### BRIEF DESCRIPTION

A method of forming a thermoplastic polymer/fiber composite includes exposing a layup including a solid thermoplastic polymer and a fiber material to a processing atmosphere having a permeability in the thermoplastic polymer greater than a permeability of nitrogen; heating the exposed layup at a temperature and pressure effective to impregnate the fiber material with the thermoplastic polymer and form an impregnated fiber material; and cooling the impregnated fiber material to provide the composite.

The above described and other features are exemplified by the following Figures and Detailed Description.

### BRIEF DESCRIPTION OF THE DRAWINGS

The following figures are exemplary embodiments.
FIG. 1 is a photograph that shows the composite of Comparative Example A;
FIG. 2 is a photograph that shows the composite Example B; and
FIG. 3 is a photograph that shows a close-up view of the prepreg of Comparative Example C;

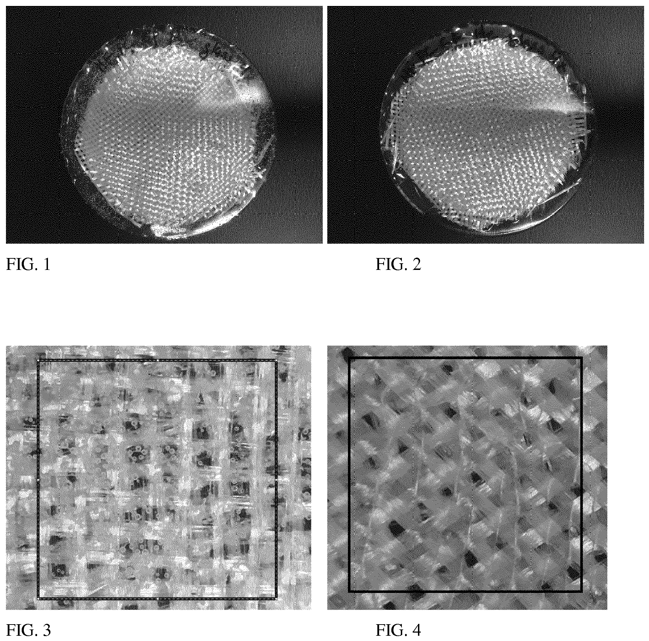

FIG. 2 is a photograph that shows a close-up view of the composite sample of Prepreg Example D.

### DETAILED DESCRIPTION

The present inventors have found a method for forming a thermoplastic polymer/fiber composite with a reduced void content. The method includes exposing a layup comprising the solid thermoplastic polymer and the fiber material to a processing atmosphere having a permeability in the thermoplastic polymer greater than that of nitrogen, for example helium. The layup is heated at a temperature and pressure effective to impregnate the fiber material with the thermoplastic polymer and form an impregnated fiber material; and the impregnated layup is cooled to provide the composite. Surprisingly, conducting the impregnating in the presence of a more permeable atmosphere such as helium provides a thermoplastic polymer/fiber composite with reduced voids.

The impregnating can include heated at a temperature and pressure effective to soften the solid thermoplastic polymer to form a layup comprising the softened thermoplastic polymer and the solid or fiber material in the softened thermoplastic polymer. The impregnating can include heating at a temperature and pressure effective to melt the solid thermoplastic polymer to form a layup comprising the melted thermoplastic polymer and the solid or fiber material in the melted thermoplastic polymer.

The relevant comparison for desirable gas permeability can be to the ambient atmosphere (greater than 78 volume percent nitrogen) and to pure nitrogen. The permeability of a candidate gas can be expressed in terms of the permeability relative to nitrogen gas (N₂), notated as Pᵣₑₗ (i.e., N₂ has a relative permeability of 1.0). For example, a candidate gas can have a permeability in the thermoplastic polymer relative to that of N₂ of greater than or equal to 2.0, greater than or equal to 4.5, greater than or equal to 20, or greater than or equal to 30. Thus, using permeability values of gases in, for example, polycarbonate, gases that can be used include, but are not limited to, helium (Pᵣₑₗ 33.0), hydrogen (Pᵣₑₗ 40.0), oxygen (Pᵣₑₗ 4.67), argon (Pᵣₑₗ 2.67), carbon dioxide (Pᵣₑₗ 26.67), water (Pᵣₑₗ 4666.7), or a combination thereof. The processing atmosphere can comprise, consist essentially of, or consist of helium, hydrogen, oxygen, argon, carbon dioxide, water, or a combination thereof. In some embodiments, the processing atmosphere contains no more than 20 volume percent of an impurity (i.e., no more than 20 volume percent of a gas having a permeability in the thermoplastic polymer relative to that of N₂ of less than or equal to 2.0), preferably no more than 10 volume percent of an impurity, more preferably no more than 5 volume percent of an impurity, or no more than 1 volume percent of an impurity, or even no more than 0.1 volume percent of an impurity. Thus, the first gas can have a purity of 80 volume percent or greater, or 90 volume percent or greater, or 95 volume percent or greater, or 99 volume percent or greater, or even 99.9 volume percent or greater. In an aspect, the processing atmosphere can comprise or consist of helium, hydrogen, oxygen, argon, carbon dioxide, water, or a combination thereof, having a purity of 80 volume percent or greater, or 90 volume percent or greater, or 99 volume percent or greater, or 99.9 volume percent or greater.

Exposing the layup to the processing atmosphere comprising the gas having a permeability greater than that of nitrogen (also referred to herein as the processing gas) can include placing the layup in a vessel containing the processing atmosphere; flowing the processing gas over the layup, for example, such that the layup is exposed to the processing atmosphere for a duration sufficient to allow diffusion throughout the layup; placing the layup under vacuum and then adding the processing atmosphere; or a combination thereof. Flowing the processing gas over the layup such that the layup is exposed to the processing atmosphere for a duration sufficient to allow diffusion throughout the layup can include calculating or estimating a maximum period of time for diffusion of the processing gas into an entirety of the vessel and then flowing the processing gas through the vessel for a period of time equal to five times the calculated or estimated period of time. The exposing can be at a pressure of 0.05 to 0.5 MPa and at a temperature less than the glass transition temperature (Tg) or the melting temperature (Tm) of the thermoplastic polymer, for example, in the case of polycarbonate, a temperature of less than 135°C, preferably 15 to 30°C.

After exposing the layup to the processing atmosphere comprising the gas having a permeability greater than that of nitrogen, the layup is heated at a temperature and pressure effective to impregnate the fiber material with the thermoplastic polymer and form an impregnated fiber material. As stated above, the impregnation can be by softening or melting the thermoplastic polymer with or without additional pressure. Impregnation can be at a temperature that is greater than or equal to the glass transition temperature of the thermoplastic polymer particles, or greater than or equal to the melting temperature of the thermoplastic polymer particles, or at least 10°C less than the decomposition temperature of the thermoplastic polymer particles. For example, the impregnation can be at a temperature of at least 125°C, or at least 150°C, or at least 200°C, or at least 250°C, or at least 275°C, or at least 300°C, depending on the thermoplastic polymer used. In some embodiments, the heating can be to a temperature of less than 475°C, more preferably less than 400°C.

Thereafter, the impregnated fiber material is cooled to provide the thermoplastic polymer/fiber composite. The cooling of the impregnated fiber material can take place outside of the processing atmosphere. Further processing can take place before or after cooling, depending on the end use of the thermoplastic polymer/fiber composite.

The fiber material can include processed mineral fibers such as those derived from blends comprising at least one of aluminum silicates, aluminum oxides, magnesium oxides, and calcium sulfate hemihydrate; natural fibers including wood flour, cellulose, cotton, sisal, jute, starch, cork flour, lignin, ground nut shells, corn, rice grain husks; synthetic reinforcing fibers, including polyester fibers such as polyethylene terephthalate fibers, polyvinyl alcohol fibers, aromatic polyamide fibers, polybenzimidazole fibers, polyimide fibers, polyphenylene sulfide fibers, polyether ether ketone fibers, boron fibers, ceramic fibers such as silicon carbide, fibers from mixed oxides of aluminum, boron and silicon; single crystal fibers or "whiskers" including silicon carbide fibers, alumina fibers, boron carbide fibers, iron fibers, nickel fibers, copper fibers; glass fibers, including textile glass fibers such as E, A, C, ECR, R, S, D, and NE glasses, and quartz; treated and un-treated carbon fibers such as vapor-grown carbon fibers including those having an average diameter of about 3.5 to about 500 nanometers as described in, for example, U.S. Patent Nos. 4,565,684 and 5,024,818 to Tibbetts et al., 4,572,813 to Arakawa; 4,663,230 and 5,165,909 to Tennent, 4,816,289 to Komatsu et al., 4,876,078 to Arakawa et al., 5,589,152 to Tennent et al., and 5,591,382 to Nahass et al.; and the like.

Non-limiting examples of fiber material include short inorganic fibers, including processed mineral fibers such as those derived from blends comprising at least one of aluminum silicates, aluminum oxides, magnesium oxides, and calcium sulfate hemihydrate, boron fibers, ceramic fibers such as silicon carbide, and fibers from mixed oxides of aluminum, boron and silicon sold under the trade name NEXTEL® by 3M Co., St. Paul, MN, USA. Also included are single crystal fibers or "whiskers" including silicon carbide, alumina, boron carbide, iron, nickel, or copper. Fiber materials such as glass fibers, basalt fibers, including textile glass fibers and quartz can also be included for purposes of this invention.

Also included are natural organic fibers known to those skilled in the art, including wood flour obtained by pulverizing wood, and fibrous products such as cellulose, cotton, sisal, jute, cloth, hemp cloth, felt, and natural cellulosic fabrics such as Kraft paper, cotton paper and glass fiber containing paper, starch, cork flour, lignin, ground nut shells, corn, rice grain husks and mixtures comprising at least one of the foregoing.

In addition, organic reinforcing fiber materials and synthetic reinforcing fibers can be used in the present invention. This includes organic polymers capable of forming fibers such as polyethylene terephthalate, polybutylene terephthalate and other polyesters, polyarylates, polyethylene, polyvinyl alcohol, polytetrafluoroethylene, acrylic resins, high tenacity fibers with high thermal stability including aromatic polyamides, polyaramid fibers such as Kevlar (product of Du Pont), polybenzimidazole, polyimide fibers such as polyimide 2080 and PBZ fiber (both products of Dow Chemical Company); and polyphenylene sulfide, polyether ether ketone, polyimide, polybenzoxazole, aromatic polyimides or polyetherimides, and the like. Combinations of any of the foregoing fibers can also be used.

The fiber material can be in the form of a woven fabric, a unidirectional tape, or a non-woven fabric, or a combination thereof. As examples of a woven fabric, a unidirectional tape, or a non-woven fabric, or a combination thereof, the fiber material can be provided in the form of monofilament or multifilament fibers and can be used either alone or in combination with other types of fiber, through, for example, co-weaving or core/sheath, side-by-side, orange-type or matrix and fibril constructions, or by other methods known to one skilled in the art of fiber manufacture. Typical cowoven structures include glass fiber-carbon fiber, carbon fiber-aromatic polyimide (aramid) fiber, and aromatic polyimide fiber-glass fiber. Fiber materials can be supplied in the form of, for example, rovings, woven fibrous reinforcements, such as 0-90 degree fabrics, non-woven fibrous reinforcements such as continuous strand mat, chopped strand mat, tissues, papers and felts and 3-dimensionally woven reinforcements, performs and braids.

In a preferred embodiment, glass fibers can be used as the fiber material to improve conductivity. Useful glass fibers can be formed from any type of fiberizable glass composition known to those skilled in the art, and include those prepared from fiberizable glass compositions commonly known as "E-glass," "A-glass," "C-glass," "D-glass," "R-glass," "S-glass," as well as E-glass derivatives that are fluorine-free and/or boron-free. Most reinforcement mats comprise glass fibers formed from E-glass and are included in the conductive compositions of this invention. Such compositions and methods of making glass filaments therefrom are well known to those skilled in the art and a more detailed description is not necessary.

Commercially produced glass fibers generally having nominal filament diameters of about 4.0 to about 35.0 micrometers, and most commonly produced E-glass fibers having nominal filament diameters of about 9.0 to about 30.0 micrometers can be included in the conductive compositions of the invention. The filaments are made by standard processes, e.g., by steam or air blowing, flame blowing and mechanical pulling. The preferred filaments for plastics reinforcement are made by mechanical pulling. Use of non-round fiber cross section is also possible. The glass fibers can be sized or unsized. Sized glass fibers are conventionally coated on at least a portion of their surfaces with a sizing composition selected for compatibility with the polymeric matrix material. The sizing composition facilitates wet-out and wet-through of the matrix material upon the fiber strands and assists in attaining desired physical properties in the composite.

Glass fibers in the form of chopped strands about one-fourth inch long or less and preferably about one-eighth inch long can also be used. They can also be longer than about one-fourth inch in length if desired.

The fiber material can be of any cross-sectional shape, for example round, square, ovoid, or irregular. The fiber material can have an average largest diameter from 1 micrometer to 1 millimeter, or from 1-500 micrometers.

The fiber material can include continuous fibers (e.g., independently having a length of greater than or equal to 1 centimeter (cm), or 1 cm to 20 meters (m), or 10 cm to 15 m, or 20 cm to 1 m), chopped fibers (e.g., having fiber lengths of 0.2 to 5 millimeters (mm), or a combination thereof and can include, for example, asbestos, carbon fibers, glass fibers, such as E, A, C, ECR, R, S, D, or NE glasses, or the like. Co-woven structures include glass fiber-carbon fiber, carbon fiber-aromatic polyimide (aramid) fiber, and aromatic polyimide fiberglass fiber or the like. The fiber material can comprise a woven glass fiber fabric, a non-woven glass fiber fabric, or a combination thereof. The plurality of glass fibers can comprise at least one of hollow glass fibers or solid glass fibers.

The fiber material can comprise fiber fabrics and/or unidirectional (UD) tapes can collectively be referred to as fiber structure. UD tapes can have greater than or equal to 90%, specifically, greater than or equal to 99% of the fibers oriented in the same direction. Fabrics have fibers in a single plane and oriented in at least two directions (e.g., a weave). The fiber structure (e.g., fabrics and tapes) can be formed into laminate(s) (also referred to as a sheet), wherein the laminate can be formed into intermediate(s), preform(s)), and the like. Individual layers comprise a ratio of resin matrix to fibers of 60/40 to 40/60 ratio by weight, specifically, 55/45 to 45/55, 60/40 to 40/60 ratio by weight, for example, 50/50 ratio by weight. This ratio can be attained by forming the layer using a volume ratio of resin to fibers of 70/30 to 30/70, preferably 65/35 to 35/65, for example, 60/40. For example, a resin matrix/fiber ratio by density of 40/60 can yield a 50/50 ratio by weight with a 3,000 tow or 3,000 twill weave. The specific ratio can be dependent on the materials used and the volume density of the fibers (e.g., the fabric). The specific amounts can readily be determined from the information herein.

When laying up the fiber structures, each subsequent layer can be oriented such that the fibers extend in the same direction as in the first layer (i.e., oriented at 0 degrees with respect to the first layer), or at a different angle than the fibers of the prior layer, e.g., at 45 degrees or 90 degrees with respect to the prior layer. Therefore, the layup (and/or the lamina) can be arranged in various orientations with respect to one another to attain a desired structural integrity, e.g., 0 degrees and 90 degrees (also referred to as "0/90"), (0/90/0), (0/45/-45), 0/60/- 60), (0/45/90/0), and so forth, with an alternating 0 and 90 degree being desirable. Also desirable, the layup is a "balanced" layup comprising multiple layers with alternating fiber direction from one layer (i.e., fabric structure) to the next layer until the center of the layup then the alternation stops and reverses itself (e.g., (0/90/0/90/90/0/90/0), (0/90/45/0/0/45/90/0), (0/90/0/0/90/0) or (0/60/90/90/90/60/0)). The first layer is considered to be oriented at 0 (i.e., zero degrees) and each subsequent fiber structure is oriented such that the fiber direction is at an angle with respect to the fiber direction of the first fiber structure. The desired combination of fiber angles is dependent upon the desired stiffness of the shell.

The number of layers employed is based upon the desired thickness and structural integrity of the shell. The shell can have a total thickness of 0.2 to 10 mm, specifically, 0.3 to 3 mm, more specifically, 0.5 mm to 2 mm, and still more specifically, 0.5 mm to 1.5 mm. Each layer can have a thickness of 0.1 to 0.4, for example, 0.1 to 0.2 mm.

Optionally, all of the fiber structures of the layup can have the same type of fibers (e.g., composition and/or diameter), or some fiber structure(s) can have a different type of fiber (e.g., composition and/or diameter).

The thermoplastic polymer can be any thermoplastic polymer that has a permeability differential between nitrogen and another gas, such as helium. For example, the thermoplastic polymer can include a cyclic olefin polymer, fluoropolymer, polyacetal, poly(C₁₋₆ alkyl)acrylate, polyacrylamide, polyacrylonitrile, polyamide, polyamideimide, polyanhydride, polyarylene ether, polyarylene ether ketone, polyarylene ketone, polyarylene sulfide, polyarylene sulfone, polybenzothiazole, polybenzoxazole, polybenzimidazole, polycarbonate, polyester, polyetherimide, polyimide, poly(C₁₋₆ alkyl)methacrylate, polymethacrylamide, polyolefin, polyoxadiazole, polyoxymethylene, polyphthalide, polysilazane, polysiloxane, polystyrene, polysulfide, polysulfonamide, polysulfonate, polythioester, polytriazine, polyurea, polyurethane, vinyl polymer, or a combination thereof. A copolymer thereof can be used, i.e., any of the foregoing polymers can be a homopolymer or a copolymer.

In a specific aspect, the polycarbonate is a linear homopolymer containing bisphenol A carbonate units (BPA-PC), commercially available under the trade name LEXAN from SABIC; or a branched, cyanophenol end-capped bisphenol A homopolycarbonate produced via interfacial polymerization, containing 3 mol% 1,1,1-tris(4-hydroxyphenyl)ethane (THPE) branching agent, commercially available under the trade name LEXAN CFR from SABIC. A combination of a linear polycarbonate and a branched polycarbonate can be used. It is also possible to use a polycarbonate copolymer or interpolymer rather than a homopolymer. Polycarbonate copolymers can include copolycarbonates comprising two or more different types of carbonate units, for example units derived from BPA and PPPBP (commercially available under the trade name XHT or CXT from SABIC); BPA and DMBPC (commercially available under the trade name DMX from SABIC); or BPA and isophorone bisphenol (commercially available under the trade name APEC from Bayer). The polycarbonate copolymers can further comprise non-carbonate repeating units, for example repeating ester units (polyester-carbonates), such as those comprising resorcinol isophthalate and terephthalate units and bisphenol A carbonate units, such as those commercially available under the trade name LEXAN SLX from SABIC; bisphenol A carbonate units and isophthalate-terephthalate-bisphenol A ester units, also commonly referred to as poly(carbonate-ester)s (PCE) or poly(phthalate-carbonate)s (PPC), depending on the relative ratio of carbonate units and ester units; or bisphenol A carbonate units and C₆₋₁₂ dicarboxy ester units such as sebacic ester units (commercially available under the trade name HFD from SABIC). Other polycarbonate copolymers can comprise repeating siloxane units (polycarbonate-siloxanes), for example those comprising bisphenol A carbonate units and siloxane units (e.g., blocks containing 5 to 200 dimethylsiloxane units), such as those commercially available under the trade name EXL from SABIC; or both ester units and siloxane units (polycarbonate-ester-siloxanes), for example those comprising bisphenol A carbonate units, isophthalate-terephthalate-bisphenol A ester units, and siloxane units (e.g., blocks containing 5 to 200 dimethylsiloxane units), such as those commercially available under the trade name FST from SABIC. Combinations of any of the above materials can be used.

Combinations of polycarbonates with other polymers can be used, for example an alloy of bisphenol A polycarbonate with an ester such as poly(butylene terephthalate) or poly(ethylene terephthalate), each of which can be semi-crystalline or amorphous. Such combinations are commercially available under the trade name XENOY and XYLEX from SABIC. A polycarbonate/acrylonitrile-butadiene-styrene (ABS) blend (commercially available under the trade name CYCOLOY from SABIC) can be used.

The solid thermoplastic polymer can be in sheet or particulate form. The shape and thickness of the sheet or sizes of the particles are selected based on the shape of the fiber material and the desired amount of thermoplastic polymer in the final composite. For example, one or more sheets having a thickness of 0.1 to 10 mm can be used, or 0.5 to 5.0 mm. The particulate thermoplastic polymer can have a size, e.g., diameter, in a range of about 0.1 to about 1,000 micrometers.

The methods described herein can be used to produce prepregs and composites. As known in the art and used herein, a prepreg is a substrate, generally fibrous, pre-impregnated with a thermoplastic polymer. Multiple prepregs can be combined under heat and pressure to form a composite using various commercially available processes. Both prepregs and composites can be in a variety of forms as described in further detail below. For example, prepregs can be in the form of continuous, UD fibers pre-impregnated with the thermoplastic polymer (often referred to as "UD tapes"). Composites that have been formed by consolidation of two or more layers of a prepreg, such as two or more layers of a tape, are often referred to as laminates.

Prepregs or composites can be produced using numerous processes such as melt impregnation, solution processing, or powder scattering. For example, one method of manufacturing thermoplastic composites is melt impregnation, that is, by softening or melting thermoplastic polymer pellets and impregnating fiber reinforcements such as glass or carbon with the softened or molten polymer.

The prepreg or composite can be prepared in any form, where the form is generally dictated by the shape of the substrate. For example, a fabric or a fiber tow can provide a layer of substrate. Where a fiber tow comprising continuous, unidirectional fibers is pre-impregnated, the prepreg is generally referred as a unidirectional tape. The thickness of such layers or tapes can vary widely, for example from 5 micrometers to 1 mm.

Composites can be prepared by consolidation of a prepreg by methods known in art. For example, laminates can be prepared by contacting at least two layers of a prepreg under conditions of heat and pressure sufficient to consolidate the prepreg. Effective temperatures can include 125 to 475 °C, at pressures from 20 to 2,000 pounds per square inch (PSI) (0.14 to 13.8 megapascals (MPa)), for example. A temperature of 125 °C can be used for polystyrene and poly(methyl methacrylate) and a temperature of 475 °C can be used for benzimidazole type polymers (e.g., having a Tg of 425 °C). A laminate can include at least two, preferably from two to one hundred layers of the prepreg, for example, a polyimide prepreg or a polyetherimide prepreg. In some embodiments, all of the layers of the laminate are formed from the polyimide prepreg, in particular the polyetherimide prepreg. In other embodiments, the laminate can comprise other layers, for example a different prepreg. In some embodiments, all of the prepreg layers used to form the laminate are the polyimide or polyetherimide prepregs produced as described herein.

A non-prepreg or composite layer can be present, such as a release layer, a copper foil, or an adhesive to enhance bonding between two layers. The adhesive can be applied using any suitable method, for example, spreading, spraying, and dipping. The adhesive can be any adhesive that provides the desired adhesion between layer(s) of the prepregs or tapes. An adhesive can be polyvinylbutyral (PVB), ethylene-vinyl acetate copolymer (EVA), an epoxy, an ultraviolet (UV) or water-curable adhesive such as a cyanoacrylate or other acrylic, or a combination comprising at least one or the foregoing.

In some embodiments the prepreg or composite is a tape that includes a plurality of unidirectional fibers, preferably continuous unidirectional fibers. In forming laminates from the tapes, the continuous unidirectional fiber-reinforced tapes, for example, polyimide or polyetherimide tapes, can be oriented with substantially parallel fibers, where the fibers of one layer are parallel, or more parallel than perpendicular with the fibers of another layer. Alternatively, the continuous unidirectional fiber-reinforced polyimide or polyetherimide tapes can be oriented with substantially non-parallel fibers, where the fibers of one layer are less parallel than perpendicular with the fibers of another layer. In still other embodiments, the continuous unidirectional fiber-reinforced polyimide or polyetherimide tapes are oriented with substantially non-parallel fibers, substantially parallel fibers, or a combination including at least one of the foregoing.

In some embodiments the prepreg or composite, in particular the laminate, can be thermoformed, for example, vacuum thermoformed, to form a shape.

The fiber-reinforced composite can include, based on a total weight percent of the composite, 1 to 90 weight percent (wt%), or 10 to 80 wt%, or 15 to 70 wt% of the fiber material and correspondingly 99 to 10 wt%, or 90 to 20 wt%, or 85 to 30 wt% of the thermoplastic polymer.

The formed composite can be viewed at a resolution of 1331 pixels per 3 cm (22.5 micrometers/pixel) to evaluate bubble presence and acceptability of the formed composite. "Bubbles" as used herein can also refer to voids, microbubbles, pinholes, and other similar defects. In some embodiments, fewer than one bubble per square centimeter (on average) is visually observed in the article, either by eye of by use of an optical microscope, and preferably no bubbles or voids are visually observed in the article, either by eye or by use of an optical microscope. At this resolution, the number of bubbles present in an evaluation area of 1 square centimeter (cm²) can be less than 100 bubbles/cm², preferably less than 50 bubbles/cm², more preferably less than 10 bubbles/cm², where the bubbles has an average diameter of less than or equal to 100 micrometers, or less than or equal to 60 micrometers, or less than or equal to 50 micrometers. Where the bubbles or voids are not spherical, the above mentioned diameter can be applied to the longest dimension of the bubble or void (i.e., the articles can be free of bubbles or voids having a longest dimension that is less than or equal to 100 micrometers). As used herein, the composites are "substantially free" of bubbles or voids when the composites contain, on average, fewer than 1 bubble/cm² determined as described above. In some embodiments, the articles do not contain any bubbles or voids that are detectable by optical microscopy. In some embodiments, the articles can have fewer than one bubble/cm² (on average), where the bubble has an average diameter of less than or equal to 100 micrometers, or less than or equal to 60 micrometers, or less than or equal to 50 micrometers.

This disclosure is further illustrated by the following examples, which are non-limiting.

### EXAMPLES

### Comparative Example A

A glass fabric layup sample was prepared using 0.35 millimeter-thick glass fabric purchased from Advanced Auto Parts, and used as received. Circular pieces of fabric were cut out of the fabric, weighing about 0.45 grams. Each 4-layer sample was made by first distributing about 1.0 gram of polycarbonate powder ground from pelletized high flow polycarbonate, particle size distribution of about 10 to about 1,000 micrometers, into the bottom of an aluminum weighing pan. After this initial layer of powder, four round pieces of glass fiber cloth were placed into the weighing pan, with an additional 1.0 g of polycarbonate powder between each piece of glass fabric. Finally, an additional 1.0 g of polycarbonate powder was distributed on top of the last glass fabric disc. Each layer of powder was distributed as evenly as possible using a scoopula.

After the layup was assembled, an additional aluminum weighing pan was placed on top, and onto which was placed a 430 gram, disc-shaped weight.

The entire assembly of weighing pans, layup, and weight was then placed inside a vessel which was then purged for 10 minutes with nitrogen. The entire vessel containing the assembly was then placed onto a hotplate that had been preheated to 320°C for 27 minutes. After that time, the vessel was removed from the hotplate and cooled, and the weighing pan assembly removed as soon as possible (1-2 minutes). Once the weighing pan was cool to touch (10 minutes), the formed layup was removed from the pan. FIG. 1 shows the composite of Comparative Example A.

### Example B

Example B was prepared in the same manner as Comparative Example A, except the entire assembly of weighing pans, layup, and weight was placed in the vessel purged with helium instead of nitrogen. FIG. 2 shows the composite of Example B.

### Prepreg Comparative Example C

As a model of constructing composite parts by combining fiber tapes or fabrics that are previously impregnated with resin ("prepreg" materials), two single layer layups were prepared in the same manner as the 4-layer samples but only having powder underneath and above a single layer of fabric. Subsequently, those two prepreg samples were combined by placing both in a weighing pan, covering with an additional weighing pan and 430 gram weight, and proceeding in the same manner through the rest of the procedure detailed for Comparative Example A, e.g., including purging with nitrogen. FIG. 3 shows the Prepreg Comparative Example C at a resolution of 1331 pixels per 3 centimeters (cm), which is 22.5 micrometers/pixel.

### Prepreg Example D

Example D was prepared in the same manner as Comparative Example C, except that the vessel containing the entire assembly of weighing pans, layup, and weight was purged with helium instead of nitrogen. FIG. 4 shows the prepreg of Example D at a resolution of 1331 pixels per 3 cm, which is 22.5 micrometers/pixel.

### Bubble presence evaluation

To quantitatively evaluate the presence of bubbles in the final parts, an image of a single glass layer part was recorded at a resolution of 1331 pixels per 3 cm, which is 22.5 micrometers/pixel. At this resolution bubbles can be identified and counted.

For the glass fabric that was used, the resolution of 1331 pixels per 3 cm resulted in an area of about 7 x 8 squares of the fabric. FIGS. 3 and 4 show images of the Prepreg Comparative Example C and Prepreg Example D, respectively, in which a 1 square centimeter (cm²) area is identified with a square. Bubbles were counted within the area of the square to determine a quantitative measure of improvement of the bubble presence in the helium-processed samples. The Prepreg Comparative Example C exhibited 227 bubbles/cm² and Prepreg Example D exhibited less than 1 bubble/cm².

While it can be possible to position the evaluation area to a region in Prepreg Example D where a bubble is counted, there are many more areas in which there are no bubbles. The opposite is true of the evaluation area positioning in the Prepreg Comparative Example C. In the Prepreg Comparative Example C, while the number of bubbles present in the evaluation area can vary, the number of bubbles is generally greater than 100 bubbles/cm².

This disclosure further encompasses the following aspects.
Aspect 1. A method of forming a thermoplastic polymer/fiber composite, the method comprising: exposing a layup comprising a solid thermoplastic polymer and a fiber material to a processing atmosphere having a permeability in the thermoplastic polymer greater than a permeability of nitrogen; heating the exposed layup at a temperature and pressure effective to impregnate the fiber material with the thermoplastic polymer and form an impregnated fiber material; and cooling the impregnated fiber material to provide the composite.
Aspect 2. The method of Aspect 1, wherein the processing atmosphere has a permeability in the thermoplastic polymer relative to that of N₂ of greater than or equal to 2.0, greater than or equal to 4.5, greater than or equal to 20, or greater than or equal to 30.
Aspect 3. The method of Aspect 1 or Aspect 2, wherein the processing atmosphere comprises helium, hydrogen, oxygen, argon, carbon dioxide, water, or a combination thereof.
Aspect 4. The method of any one of the preceding aspects, wherein the processing atmosphere consists essentially of helium, hydrogen, oxygen, argon, carbon dioxide, water, or a combination thereof.
Aspect 5. The method of any one of the preceding aspects, wherein the processing atmosphere consists of helium, hydrogen, oxygen, argon, carbon dioxide, water, or a combination thereof.
Aspect 6. The method of any one of the preceding aspects, wherein exposing the layup to the processing atmosphere comprises placing the layup in a vessel containing the processing atmosphere; or flowing a gas having a permeability in the thermoplastic polymer greater than a permeability of nitrogen over the layup; or placing the layup under vacuum and then adding the processing atmosphere; or a combination thereof.
Aspect 7. The method of any one of the preceding aspects, wherein the exposing is at a pressure of 0.05 to 0.5 MPa.
Aspect 8. The method of any one of the preceding aspects, wherein the exposing is at a temperature less than a glass transition temperature or melting temperature of the thermoplastic polymer, preferably at 15 to 30°C.
Aspect 9. The method of any one of the preceding aspects, wherein the fiber material is in the form of a woven fabric, a unidirectional tape, or a non-woven fabric, or a combination thereof.
Aspect 10. The method of any one of the preceding aspects, wherein the fiber material comprises polyester fibers, polyvinyl alcohol fibers, aromatic polyamide fibers, polybenzimidazole fibers, polyimide fibers, polyphenylene sulfide fibers, polyether ether ketone fibers, boron fibers, silicon carbide fibers, mixed oxide fibers, silicon carbide fibers, alumina fibers, boron carbide fibers, iron fibers, nickel fibers, copper fibers, glass fibers, quartz, vapor-grown carbon fibers, or a combination thereof.
Aspect 11. The method of any one of the preceding aspects, wherein the thermoplastic polymer comprises a cyclic olefin polymer, fluoropolymer, polyacetal, poly(C₁₋₆ alkyl)acrylate, polyacrylamide, polyacrylonitrile, polyamide, polyamideimide, polyanhydride, polyarylene ether, polyarylene ether ketone, polyarylene ketone, polyarylene sulfide, polyarylene sulfone, polybenzothiazole, polybenzoxazole, polybenzimidazole, polycarbonate, polyester, polyetherimide, polyimide, poly(C₁₋₆ alkyl)methacrylate, polymethacrylamide, polyolefin, polyoxadiazole, polyoxymethylene, polyphthalide, polysilazane, polysiloxane, polystyrene, polysulfide, polysulfonamide, polysulfonate, polythioester, polytriazine, polyurea, polyurethane, vinyl polymer, a copolymer thereof, or a combination thereof.
Aspect 12. The method of any one of the preceding aspects, wherein the solid thermoplastic polymer is in a particulate form, preferably wherein the solid particulate thermoplastic polymer has a size in a range of about 0.1 to about 1,000 micrometers.
Aspect 13. A composite formed according to the method of any one of the preceding aspects, having a bubble content of less than 100 bubbles per square centimeter, preferably less than 50 bubbles per square centimeter, more preferably less than 10 bubbles per square centimeter, when viewed at a resolution of 1331 pixels per 3 centimeters (22.5 micrometers/pixel).
Aspect 14. A composite formed according to the method of any one of the preceding aspects, having a lower void content than the same composite manufactured under a nitrogen atmosphere.
Aspect 15. The composite of Aspect 14, wherein the fiber material is disposed wholly within the thermoplastic polymer.

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other (e.g., ranges of "up to 25 wt%, or, more specifically, 5 wt% to 20 wt%", is inclusive of the endpoints and all intermediate values of the ranges of "5 wt% to 25 wt%," etc.). "Combination" is inclusive of blends, mixtures, alloys, reaction products, and the like. The term "a combination thereof' in reference to a list of alternatives is open, i.e., includes at least one of the listed alternatives, optionally with a like alternative nots listed. The terms "a" and "an" and "the" do not denote a limitation of quantity, and are to be construed to cover both the singular and the plural, unless otherwise indicated herein or clearly contradicted by context. "Or" means "and/or" unless clearly stated otherwise. Reference throughout the specification to "some embodiments", "an embodiment", and so forth, means that a particular element described in connection with the embodiment is included in at least one embodiment described herein, and may or may not be present in other embodiments. In addition, it is to be understood that the described elements may be combined in any suitable manner in the various embodiments.

"About" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within ± 20%, 10% or 5% of the stated value.

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs. All cited patents, patent applications, and other references are incorporated herein by reference in their entirety. However, if a term in the present application contradicts or conflicts with a term in the incorporated reference, the term from the present application takes precedence over the conflicting term from the incorporated reference.

While particular embodiments have been described, alternatives, modifications, variations, improvements, and substantial equivalents that are or can be presently unforeseen can arise to applicants or others skilled in the art. Accordingly, the appended claims as filed and as they may be amended are intended to embrace all such alternatives, modifications variations, improvements, and substantial equivalents.

## Claims

1. A method of forming a thermoplastic polymer/fiber composite, the method comprising:
exposing a layup comprising a solid thermoplastic polymer and a fiber material to a processing atmosphere having a permeability in the thermoplastic polymer greater than a permeability of nitrogen;
heating the exposed layup at a temperature and pressure effective to impregnate the fiber material with the thermoplastic polymer and form an impregnated fiber material; and
cooling the impregnated fiber material to provide the composite.

2. The method of Claim 1, wherein the processing atmosphere has a permeability in the thermoplastic polymer relative to that of N₂ of greater than or equal to 2.0, greater than or equal to 4.5, greater than or equal to 20, or greater than or equal to 30.

3. The method of Claim 1 or Claim 2, wherein the processing atmosphere comprises helium, hydrogen, oxygen, argon, carbon dioxide, water, or a combination thereof.

4. The method of any one of the preceding claims, wherein the processing atmosphere consists essentially of helium, hydrogen, oxygen, argon, carbon dioxide, water, or a combination thereof.

5. The method of any one of the preceding claims, wherein the processing atmosphere consists of helium, hydrogen, oxygen, argon, carbon dioxide, water, or a combination thereof.

6. The method of any one of the preceding claims, wherein exposing the layup to the processing atmosphere comprises
placing the layup in a vessel containing the processing atmosphere; or
flowing a gas having a permeability in the thermoplastic polymer greater than a permeability of nitrogen over the layup; or
placing the layup under vacuum and then adding the processing atmosphere; or
a combination thereof.

7. The method of any one of the preceding claims, wherein the exposing is at a pressure of 0.05 to 0.5 MPa.

8. The method of any one of the preceding claims, wherein the exposing is at a temperature less than a glass transition temperature or melting temperature of the thermoplastic polymer, preferably 15 to 30°C.

9. The method of any one of the preceding claims, wherein the fiber material is in the form of a woven fabric, a unidirectional tape, or a non-woven fabric, or a combination thereof.

10. The method of any one of the preceding claims, wherein the fiber material comprises polyester fibers, polyvinyl alcohol fibers, aromatic polyamide fibers, polybenzimidazole fibers, polyimide fibers, polyphenylene sulfide fibers, polyether ether ketone fibers, boron fibers, silicon carbide fibers, mixed oxide fibers, silicon carbide fibers, alumina fibers, boron carbide fibers, iron fibers, nickel fibers, copper fibers, glass fibers, quartz, vapor-grown carbon fibers, or a combination thereof.

11. The method of any one of the preceding claims, wherein the thermoplastic polymer comprises a cyclic olefin polymer, fluoropolymer, polyacetal, poly(C₁₋₆ alkyl)acrylate, polyacrylamide, polyacrylonitrile, polyamide, polyamideimide, polyanhydride, polyarylene ether, polyarylene ether ketone, polyarylene ketone, polyarylene sulfide, polyarylene sulfone, polybenzothiazole, polybenzoxazole, polybenzimidazole, polycarbonate, polyester, polyetherimide, polyimide, poly(C₁₋₆ alkyl)methacrylate, polymethacrylamide, polyolefin, polyoxadiazole, polyoxymethylene, polyphthalide, polysilazane, polysiloxane, polystyrene, polysulfide, polysulfonamide, polysulfonate, polythioester, polytriazine, polyurea, polyurethane, vinyl polymer, a copolymer thereof, or a combination thereof.

12. The method of any one of the preceding claims, wherein the solid thermoplastic polymer is in a particulate form, preferably wherein the solid particulate thermoplastic polymer has a size in a range of about 0.1 to about 1,000 micrometers.

13. A composite formed according to the method of any one of the preceding claims, having a bubble content of less than 100 bubbles per square centimeter, preferably less than 50 bubbles per square centimeter, more preferably less than 10 bubbles per square centimeter, when viewed at a resolution of 1331 pixels per 3 centimeters (22.5 micrometers/pixel).

14. A composite formed according to the method of any one of the preceding claims, having a lower void content than the same composite manufactured under a nitrogen atmosphere.

15. The composite of Claim 14, wherein the fiber material is disposed wholly within the thermoplastic polymer.
